# EUROPÄISCHE PATENTSCHRIFT

(11) **EP 0 586 828 B1**
(45) Veröffentlichungstag und Bekanntmachung des Hinweises auf die Patenterteilung: **05.03.1997**
(21) Anmeldenummer: 93111073.8
(22) Anmeldetag: 10.07.1993
(51) Int. Cl.: B06B 1/06, G10K 9/12

(54) **Hydrophon**
Hydrophone
Hydrophone

(30) Priorität: 11.08.1992 DE 4226485
(43) Veröffentlichungstag der Anmeldung: 16.03.1994
(73) Patentinhaber: Prakla-Seismos GmbH, 30655 Hannover (DE)
(72) Erfinder: Technau, Manfred, Dr., D-30880 Laatzen (DE); Weichart, Helmut, Dr., D-30457 Hannover (DE)
(74) Vertreter: Meyer, Ludgerus A., Dipl.-Ing.

(56) Entgegenhaltungen:
- EP-A- 0 265 679
- FR-A- 2 185 800
- GB-A- 2 196 208
- US-A- 3 360 664
- US-A- 3 763 464

## Beschreibung

Die Erfindung betrifft ein Hydrophon, insbesondere zur Verwendung in einem marineseismischen Streamer, nach dem Oberbegriff des Anspruchs 1.

In einem marineseismischen Streamer, der eine Länge von 2 - 3 km aufweisen kann, sind in der Regel eine Vielzahl von Hydrophonen im Abstand zueinander angeordnet. Die Hydrophone sind als Druckmeßdosen ausgeführt, deren Anschlußleitungen üblicherweise offenliegen. Da ein Streamer normalerweise mit Öl sehr geringer Leitfähigkeit gefüllt ist, ist eine Isolierung der Anschlußelemente des Hydrophons nicht erforderlich.

Eine derartige Streamerausbildung weist jedoch auch Risiken auf, da bei einem Leck des Streamers Seewasser in dessen Inneres eindringen kann und damit die Isolierung aufhebt. Der fehlerhafte Abschnitt des Streamers ist daher elektrisch nicht mehr verwendbar. Bei einer längeren Einwirkung des Seewassers auf die betroffenen Hydrophone treten ferner Korrosionserscheinungen auf, die eine vollständige Unbrauchbarkeit der betroffenen Hydrophone bewirken. Ein derartig fehlerhafter Streamer muß daher umfangreich repariert und neu aufgebaut werden.

In den bekannten Streamern verwendete Hydrophone bestehen im wesentlichen aus Druckmeßdosen, die beispielsweise aus zwei gegeneinander gerichteten topfähnlichen Halbschalen bestehen, die randseitig miteinander verlötet sind. Die Sensorelemente sind als Piezoscheiben normalerweise auf die inneren Seiten der die Druckmembranen bildenden Dosen-Oberflächen aufgebracht. Die Verbindung zu den Membranen erfolgt durch Klebung. Zur Kompensation von Beschleunigungseinflüssen sind jeweils zwei Sensoren elektrisch entgegengesetzt verschaltet.

Bei der Herstellung derartiger Druckmeßdosen werden die zwei Dosenhälften randseitig durch Weichlot miteinander verlötet. Die hierbei entstehende Hitze führt dazu, daß innerhalb der Dose kein stabiles Druckniveau erreichbar ist, so daß der im Inneren der Druckmeßdose im erkalteten Zustand herrschende Luftdruck von Hydrophon zu Hydrophon stark varriiert. Aus diesem Grunde kommt auch ein Hartlöten der Dosenhälften nicht in Betracht.

Marineseismische Streamer werden normalerweise in Wassertiefen bis zu 30 m eingesetzt. Für größere Tiefen weisen diese Hydrophone eine Tiefenbegrenzung auf, die darin besteht, daß die einander gegenüberliegenden Piezosensensoren bei größeren Tiefen gegen Abstandskörper drücken und dadurch ihre Meßeigenschaft verlieren. Ein unmittelbares Aufeinanderstoßen der Piezokristalle ist unzulässig, da durch unmittelbares Aufeinanderprallen von mikrokristallinen Strukturen eine leichte Zerstörung der Piezokristalle stattfindet. Ferner kann ein randseitiges Lösen der Klebung zwischen Membran und Piezosensor auftreten, so daß die Ausschußrate der Hydrophone bei Absenken unter eine vorgegebene Tiefe exponentiell ansteigt.

Aus der FR 2 122 675 ist ein Hydrophon bekannt, das zwei parallel im Abstand zueinander angeordnete Membranen aufweist. Der Abstand der Membranen voneinander ist durch ringförmige Verstärkungen am Außenumfang festgelegt. Die Membranen können aus Metall bestehen und auf ihrer Außenseite sind Piezo-Druckwandlerelemente angeordnet.

Aus der DE 37 32 401 ist ein piezo-elektrisches Hydrophon bekannt, das ebenfalls auf gegenüberliegenden Membranen montierte Wandlerelemente aufweist. Die Wandlerelemente sind dabei auf der Innenseite der Membranen angeordnet, die aus rostfreiem Stahl bestehen, und die durch Laserstrahlschweissung mit den Seitenteilen verschweißt sind. Im Inneren des Hydrophons und auf den Außenseiten der Membranen sind mechanische Überlastungsschutzelemente angeordnet, die die Membranverformung begrenzen.

Aus der DE-OS 39 31 578 ist ein piezo-elektrisches Membranhydrophon bekannt, bei dem die piezo-elektrisch aktivierbare Folie in einen Isolierrahmen eingespannt ist und auf gegenüberliegenden Flächen mit sich in einem Teilbereich überlappenden Elektroden versehen ist. Die Folie ist auf der dem Meßobjekt abgewandten Seite durch eine elektrisch isolierende Vergußmassenschicht abgedeckt, die auch den Einspannrahmen vollständig umgibt.

Es ist auch bekannt, die Piezosensoren auf der Außenseite der Membranen anzubringen und mit einem Schutzlack zu überziehen. Die Membranen sind dabei randseitig miteinander verschweißt. Ein derartiges aus einem Vortragspapier der 51. EAEG-Tagung von der Firma Prakla-Seismos vorgetragenes Hydrophon ist allerdings bisher nicht zum Einsatz gekommen, da die grundsätzlichen Probleme der genannten Art auch bei diesem Typ nicht ausreichend beherrschbar waren.

Der Erfindung liegt daher die Aufgabe zugrunde, ein Hydrophon der letztgenannten Art derart weiterzubilden, das bei kleinem Aufbau eine hohe mechanische Festigkeit, eine Unzerstörbarkeit bei großen Umgebungsdrücken und eine Sicherung gegen äußere Einflüsse ermöglicht, wobei die Membraneigenschaften der Stahlscheiben und die Auslenkbarkeit der Membran verbessert sind.

Diese Aufgabe wird durch die im Anspruch 1 angegebene Erfindung gelöst. Vorteilhafte Weiterbildungen der Erfindung sind in Unteransprüchen angegeben.

Ein erfindungsgemäßes Hydrophon ist insbesondere aus zwei scheibenförmigen Stahlscheiben mit je einem Piezosensor gebildet. Zur Verbesserung der Membraneigenschaften der Stahlscheiben und zur Erreichung eines Abstandes der Stahlscheiben zueinander werden die Stahlscheiben vor ihrer Verschweissung topfförmig profiliert, wobei insbesondere im Rand des Membranbereichs eine weitere ringförmige Profilierung mit partieller Reduzierung der Membrandicke vorgenommen wird. Dadurch wird die Auslenkbarkeit der Membran verbessert. Die randseitige Schweißung der Stahlscheiben miteinander erfolgt durch Laserschweißung. Der gesamte Drucksensor ist einschließlich Piezosensoren und Anschlußleitungen durch eine elektrisch isolierende Kunststoffbeschichtung abgedeckt, wobei die Kunststoffschicht auch die Isolierungen der Anschlußleitungen mit einbezieht, so daß das gesamte Hydrophon gegenüber Umgebungseinflüssen isolierend ausgebildet ist. Ein derartiges Hydrophon kann daher ohne weiteres in polaren Flüssigkeiten eingesetzt werden. Bei einem Wassereinbruch in einen Streamer bleiben daher die elektrischen Kennwerte des Hydrophons unbeeinflußt. Vorzugsweise wird zur Aushärtung der Kunststoffschicht eine UV-Härtung verwendet, um keinen Gradienten-Verlauf der Aushärtung zu bewirken. Die UV-härtbare Schicht besteht vorzugsweise aus Urethanmetylacrylat oder Acrylester.

Die Verschweißung der Randbereiche über Laserschweißung weist den entscheidenden Vorteil auf, daß die Erhitzung im Inneren des Drucksensors während der Schweißung sehr gering ist und sich andererseits dadurch im Vergleich zu einer Weichlötung eine außerordentlich hohe mechanische Stabilität erreichen läßt.

Vorzugsweise sind die Piezosensoren über eine Klebeschicht, die insbesondere durch Zugabe von Silberpulver zum Klebemittel leitfähig wird, auf die Außenseiten der Stahlscheiben aufgeklebt. Bei einer Auslenkung der Stahlscheiben aufgrund statischer Drücke erfolgt die Belastung der Piezokristalle im Klebebereich dadurch auf Zug, während sie bei der Anbringung auf der Innenseite einer Druckmeßdose auf Druck beansprucht wurden, so daß die außenseitige Anbringung der Piezosensoren erhebliche Vorteile gegenüber einer innenseitigen Anbringung aufweist.

Vorzugsweise ist die Kunststoffschicht mittels UV-Strahlung aushärtbar. Sie kann beispielsweise Urethanmetylacrylat oder Acrylester sein.

Vorzugsweise werden die Drucksensoren in ringförmigen Haltern aufgenommen, die der Befestigung der Hydrophone innerhalb der Streamer dienen und die Hydrophone gegen mechanische Einflüsse durch Zugseile und andere Elemente im Streamer schützen.

Erfindungsgemäße Hydrophone werden dadurch hergestellt, daß zunächst zwei ebene Stahlscheiben derart geprägt werden, daß sie einen Randbereich aufweisen. Dann werden zwei Stahlscheiben gegeneinander gerichtet und randseitig mittels Laserschweissung miteinander verbunden. Auf die zentralen Bereiche der Stahlscheiben werden außenseitig Piezosensoren aufgeklebt. Diese können vor der Schweißung oder nach der Verschweißung geklebt werden. Anschließend werden die Stahlscheiben einschließlich Piezosensoren und elektrischen Anschlußelementen mittels einer UV-härtbaren Kunststoffschicht elektrisch versiegelt.

Ein derartiges Hydrophon ist klein in Abmessungen und Gewicht, mechanisch robust, weitgehend überlastbar und vor Kurzschluß und Korrision geschützt. Das Hydrophon ist ferner hochdruckluftdicht. Es ist eine völlige Unempfindlichkeit gegenüber polaren Flüssigkeiten erreicht.

Die Erfindung wird nachstehend anhand eines Ausführungsbeispiels näher erläutert. Es zeigen:
- Fig. 1: eine Schnittansicht durch den Drucksensor eines erfindungsgemäßen Hydrophons,
- Fig. 2: eine vereinfachte Schnittansicht einer alternativen Ausführungsform eines Drucksensors eines Hydrophons,
- Fig. 3: die Darstellung eines Halters mit einem Drucksensor, die das Hydrophon nach der Erfindung bilden.

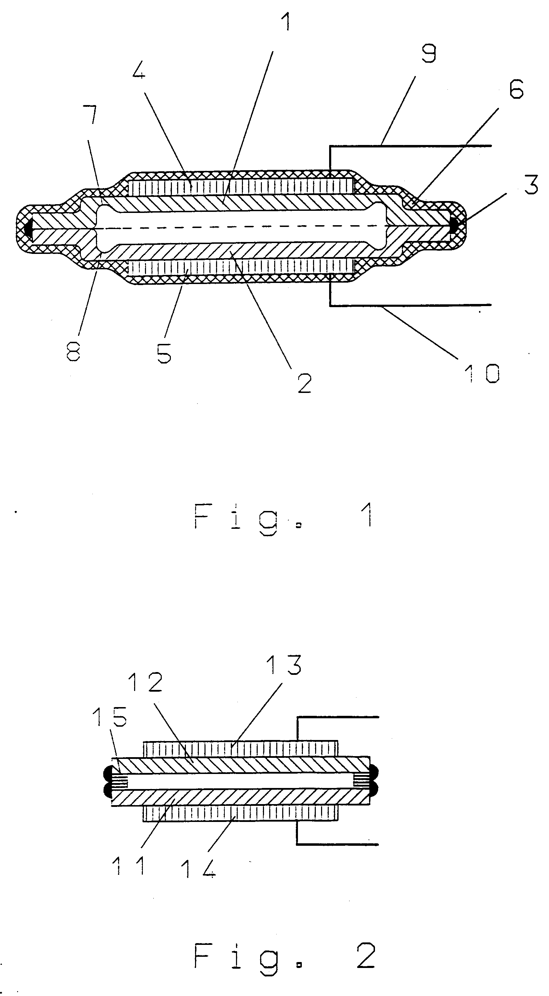

Ein Drucksensor der in Fig. 1 gezeigten Art weist zwei deckelförmige Stahlscheiben 1, 2 auf, die im Membranbereich durch eine deckelförmige Profilierung einen Spalt zueinander bilden. Die Stahlscheiben liegen im Randbereich unmittelbar aufeinander auf und sind an ihrer Außenseite durch eine mittels Laserstrahl erzeugte Schweißnaht 3 miteinander verbunden. Die Verschweißung erfolgt insbesondere auf Rotationsschweißanlagen. Sie hat den Vorteil, daß die Erwärmung der Stahlscheiben lediglich punktuell und sehr kurzfristig auftritt, so daß nahezu keine Innenraumerwärmung während des Schweißens auftritt. Durch die lotmittelfreie Verschweißung können die Stahlscheiben ferner unmittelbar aufeinander liegen. Die Verschweißung ist äußerst fest und die gesamte aus den Stahlscheiben gebildete Meßdose ist daher auch unter hohen Drücken einsatzfähig.

Die beiden Stahlscheiben weisen in ihrem äußeren Membranbereich ringförmige Dicken-Schwächungen 7, 8 auf, die eine bessere Auslenkbarkeit der Membranflächen ermöglichen. Es sind ein oder zwei ringförmige Prägungen vorhanden, die zur Erzeugung der deckelförmigen Scheiben, insbesondere während des Tiefziehvorganges ausgebildet werden.

Bereits vor der Schweißung oder im Anschluß an die Schweißung werden die Stahlscheiben mit Piezokristallen 4, 5 versehen, die auf die äußere Oberfläche der Stahlscheiben in deren Membranbereich aufgeklebt werden. Sofern es erwünscht ist, die Piezokristalle gegenüber den Stahlscheiben isoliert aufzukleben, muß ein isolierender Kleber verwendet werden. Es wird jedoch bevorzugt, einen leitfähigen Kleber, dessen Leitfähigkeit durch Zugabe von Silberpulver zum Klebemittel erzeugt wird, zu verwenden, so daß die gegen die Stahlscheiben gerichteten Pole der Piezokristalle einen unmittelbaren elektrischen Kontakt zu den Stahlscheiben aufweisen. Die äußeren Flächen der Piezokristalle sind mit Anschlußdrähten versehen.

Durch diesen Aufbau des Drucksensors sind die Piezoscheiben in Bewegungsrichtung entgegengesetzt geschaltet, so daß Beschleunigungssignale, die auf beide Piezosensoren in gleicher Richtung wirken, sich aufheben. Voraussetzung hierfür ist die völlige Symmetrie des Aufbaus des Drucksensors.

Der gesamte Drucksensor wird anschließend mit einer hochisolierenden Kunstharzbeschichtung ummantelt, die vorzugsweise auch die Isolierungen der Anschlußleitungen 9, 10 mit einbezieht. Dadurch sind alle Bereiche des Drucksensors gegen die Umgebung elektrisch isoliert.

Um eine hohe Gleichmäßigkeit der Kunststoffschicht zu erreichen, wird zur Aushärtung UV-Strahlung verwendet. Dadurch wird vermieden, daß sich ein Gradienten-Verlauf im Aushärtungsprozeß bildet und damit eine mögliche Ungleichmäßigkeit in der Beschichtung entsteht. Es wird vorzugsweise Urethanmethylacrylat oder Acrylester verwendet.

Bei einem Einsatz eines derartigen Hydrophons hängt die Durchbiegung der Membranen von der Einsatztiefe unter Wasser ab. Der Abstand zwischen den Membranen der Stahlscheiben 1, 2 wird vorzugsweise derart eingestellt, daß ab einer Wassertiefe von etwa 30 m die Membran-Innenoberflächen einander berühren, so daß bei größeren Tiefen kein Meßsignal mehr an den Piezoempfängern abnehmbar ist, da keine Auslenkung der Membranen mehr erfaßbar ist.

Der innere Abstand der Membranen beträgt etwa 0,3 bis 0,4 mm. Die Dicke der Piezoscheiben beträgt etwa 0,2 mm.

Fig. 2 zeigt eine alternative Ausführungsform eines Drucksensors. Es sind zwei ebene Stahlscheiben 11, 12 verwendet, die randseitig durch einen Abstandsring 15 voneinander auf einen Abstand von etwa 0,5 mm gehalten sind. Eine Profilierung der Stahlscheiben 11, 12 kann in ähnlicher Weise wie bei der Ausführungsform der Fig. 1 eingesetzt werden. Auf den Oberseiten der Stahlscheiben sind Piezokristalle 13, 14 aufgeklebt. Die Stahlscheiben 11, 12 sind mit dem Abstandsring 15 über zwei umlaufende Schweißnähte schweißt. Diese Ausführungsform weist den Vorteil auf, daß ein Tiefziehvorgang vermieden werden kann, so daß eine weitere Verbesserung der Symmetrie des Drucksensors erreichbar ist.

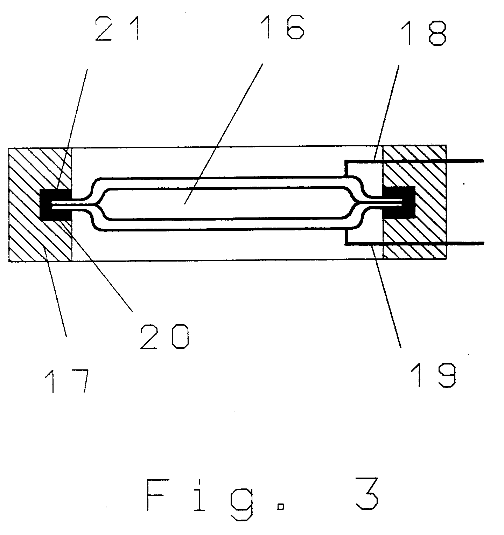

Fig. 3 zeigt einen Drucksensor gemäß Fig. 1, der in einen ringförmigen Halter 17 eingesetzt ist. Der Halter weist eine ringförmige innere Nut 20 auf, in der sich ein elastischer Ring, insbesondere Gummiring 21 befindet, der den Rand des Drucksensors 16 aufnimmt. An den Drucksensor 16 sind Anschlußleitungen 18, 19 angeschlossen, die durch den Halter 17 hindurchgeführt sind, der auch die Funktion der Zugentlastung aufweist.

Die auf diese Weise hergestellten Hydrophone werden entlang einem Streamer in äquidistanten Abständen befestigt und gruppenweise verschaltet.

Die Prägung der Profilierungen 7, 8 kann während des Tiefziehens der Stahlscheiben erfolgen, es kann jedoch auch eine spanabhebende Formung verwendet werden. In Fällen, in denen die Beschleunigungskompomente nicht auszugleichen ist, kann vorgesehen sein, daß auf die Symmetrie des Drucksensors verzichtet wird und daß nur eine Scheibe als Membran mit einem Piezokristall verwendet wird.

Anstelle der Verwendung eines nicht rostenden Stahls für die Membran kann auch ein anderes Metall mit vergleichbaren elektrischen und mechanischen Eigenschaften verwendet werden.

### Bezugszeichenliste

- 1: Stahlscheibe
- 2: Stahlscheibe
- 3: Schweißnaht
- 4: Piezokristall
- 5: Piezokristall
- 6: Schutzschicht
- 7: Profilierung
- 8: Profilierung
- 9: Anschlußdraht
- 10: Anschlußdraht
- 11: Stahlscheibe
- 12: Stahlscheibe
- 13: Piezokristall
- 14: Piezokristall
- 15: Abstandsring
- 16: Drucksensor
- 17: Halter
- 18: Anschlußleitung
- 19: Anschlußleitung
- 20: Nut
- 21: Ring

## Patentansprüche

1. Hydrophon, insbesondere zur Verwendung in einem marineseismischen Streamer, mit einem Drucksensor, auf dessen Membranflächen Piezosensoren (4, 5) befestigt sind, wobei der Drucksensor aus zwei im wesentlichen scheibenförmigen im zentralen Bereich mit Abstand gegeneinander gerichteten Stahlscheiben (1, 2) besteht, die randseitig gasdicht verbunden sind, und auf der Außenseite der Stahlscheiben (1, 2) jeweils ein Piezosensor (4, 5) befestigt ist, wobei der Drucksensor gegen seine äußere Umgebung elektrisch isoliert ist, dadurch gekennzeichnet, daß die Stahlscheiben (1, 2) eine deckelförmige Profilierung mit einem Randbereich und einem zurückspringenden im wesentlichen ebenen Membranbereich aufweisen, daß die Stahlscheiben (1, 2) über eine randseitige Laserschweißung (3) miteinander verbunden sind, und daß der gesamte Drucksensor einschließlich Piezosensoren und Anschlußleitungen mit einer elektrisch isolierenden Kunststoffschicht (6) überzogen ist.

2. Hydrophon nach Anspruch 1, dadurch gekennzeichnet, daß im Rand des Membranbereichs eine weitere ringförmige Profilierung (8) mit partieller Reduzierung der Membrandicke vorgesehen ist.

3. Hydrophon nach Anspruch 1, dadurch gekennzeichnet, daß die Piezosensoren (4, 5) über eine leitfähige Klebeschicht auf den Stahlscheiben (1, 2) aufgeklebt sind, wobei die Leitfähigkeit der Klebeschicht durch Zugabe von Silberpulver zum Klebemittel erreicht ist.

4. Hydrophon nach Anspruch 1, dadurch gekennzeichnet, daß die Kunststoffschicht mittels UV-Strahlung aushärtbar ist.

5. Hydrophon nach Anspruch 4, dadurch gekennzeichnet, daß die Kunststoffschicht Urethanmethylacrylat oder Acrylester ist.

6. Hydrophon nach einem oder mehreren der vorhergehenden Ansprüche, dadurch gekennzeichnet, daß der Drucksensor in einem ringförmigen Halter (17) aufgenommen ist und mit Abstand eine Vielzahl von Hydrophonen in einem marineseismischen Streamer eingesetzt ist.

7. Verfahren zur Herstellung eines Hydrophons nach einem oder mehreren der vorhergehenden Ansprüche mit den folgenden verfahrensschritten : in zwei ebene Stahlscheiben (1, 2) wird ein erhabener Randbereich geprägt; die geprägten Scheiben werden im aneinander stoßenden Randbereich mittels Laser-Schweißung miteinander verbunden; auf die zentralen Bereiche der Stahlscheiben werden Piezosensoren aufgeklebt; und die Stahlscheiben einschließlich Piezosensoren und elektrische Anschlußelemente werden mittels einer UV-härtbaren Kunststoffschicht elektrisch versiegelt.

## Claims

1. A hydrophone, particularly for use in a seismic marine streamer, comprising a pressure sensor having diaphragm surfaces to which piezosensors (4, 5) are secured, the pressure sensor comprising two substantially disc-shaped steel plates (1, 2) spaced apart and facing one another in the central region and connected at the edges in gas-tight manner, and a piezosensor (4, 5) is secured to the outside of each respective steel disc (1, 2), the pressure sensor being electrically insulated from its external environment, characterised in that the steel discs (1, 2) have a cover-like profiling with an edge region and a resilient substantially flat diaphragm region, in that the steel discs (1, 2) are interconnected by a laser weld (3) at the edge, and in that the entire pressure sensor including the piezosensors and connecting leads is coated with an electrically insulating plastic layer (6).

2. A hydrophone according to claim 1, characterised in that the edge of the diaphragm region has an additional annular profiling (8) with partial reduction of the diaphragm thickness.

3. A hydrophone according to claim 1, characterised in that the piezosensors (4, 5) are stuck to the steel discs (1, 2) via a conductive adhesive layer, which is made conductive by adding silver powder to the adhesive.

4. A hydrophone according to claim 1, characterised in that the plastic layer can be cured by ultraviolet radiation.

5. A hydrophone according to claim 4, characterised in that the plastic layer is urethane methyl acrylate or acrylic ester.

6. A hydrophone according to one or more of the preceding claims, characterised in that the pressure sensor is received in an annular holder (17) and a number of spaced-apart hydrophones are inserted into a seismic marine streamer.

7. A method of producing a hydrophone according to one or more of the preceding claims and comprising the following steps: a raised edge region is embossed in two flat steel discs (1, 2); the adjacent edge regions of the embossed discs are joined by a laser weld; piezosensors are stuck to the central regions of the steel discs, and the steel discs, piezosensors and electric connecting elements are electrically sealed by a plastic layer which can be cured by ultraviolet light.

## Revendications

1. Hydrophone destiné en particulier à être utilisé dans une flûte sismique marine, comportant un détecteur de pression sur les surfaces formant membranes duquel sont fixés des détecteurs piézoélectriques (4, 5), étant précisé que le détecteur de pression se compose de deux plaques métalliques (1, 2) globalement en forme de disques et espacées à l'opposé l'une de l'autre dans la zone centrale, qui sont reliées sur leur bord de façon étanche au gaz, et qu'un détecteur piézoélectrique (4, 5) est fixé sur la face extérieure de chaque plaque métallique (1, 2), le détecteur de pression étant isolé électriquement par rapport à son environnement extérieur, caractérisé en ce que les plaques métalliques (1, 2) ont un profilage en forme de couvercle avec une zone de bord et, en retrait, une zone formant membrane globalement plane, en ce que les plaques métalliques (1, 2) sont reliées par une soudure au laser (3) réalisée sur le bord, et en ce que l'ensemble du détecteur de pression, y compris les détecteurs piézoélectriques et les lignes de raccordement, est recouvert d'une couche de matière synthétique (6) électriquement isolante.

2. Hydrophone selon la revendication 1, caractérisé en ce qu'il est prévu, au bord de la zone formant membrane, un autre profilage annulaire (8) présentant une réduction partielle de l'épaisseur de membrane.

3. Hydrophone selon la revendication 1, caractérisé en ce que les détecteurs piézoélectriques (4, 5) sont collés sur les plaques métalliques (1, 2) grâce à une couche adhésive conductrice, la conductivité de la couche adhésive étant obtenue grâce à l'adjonction de poudre d'argent à l'agent adhésif.

4. Hydrophone selon la revendication 1, caractérisé en ce que la couche de matière synthétique est apte à être durcie par rayonnement UV.

5. Hydrophone selon la revendication 4, caractérisé en ce que la couche de matière synthétique est constituée de méthylacrylate d'uréthanne ou d'ester acrylique.

6. Hydrophone selon l'une au moins des revendications précédentes, caractérisé en ce que le détecteur de pression est logé dans un support annulaire (17) et plusieurs hydrophones sont placés, espacés les uns des autres, dans une flûte sismique marine.

7. Procédé pour fabriquer un hydrophone selon l'une au moins des revendications précédentes, comprenant les phases suivantes : dans deux plaques métalliques planes (1, 2), on réalise par estampage une zone de bord en relief ; on relie les plaques estampées par soudage au laser dans les zones du bord qui se touchent ; on colle des détecteurs piézoélectriques sur la zone centrale des plaques métalliques ; et on scelle électriquement les plaques métalliques, y compris les détecteurs piézoélectriques et les éléments de raccordement électriques, à l'aide d'une couche de matière synthétique apte à être durcie par UV.
